**Europäisches Patentamt**

**European Patent Office**

**Office européen des brevets**

(19)

(11) Veröffentlichungsnummer: **0 352 426 B1**

(12) # EUROPÄISCHE PATENTSCHRIFT

(45) Veröffentlichungstag der Patentschrift: **09.12.92**

(51) Int. Cl.⁵: **B60G 17/015**, B62D 61/12

(21) Anmeldenummer: **89109190.2**

(22) Anmeldetag: **22.05.89**

(54) **Vorrichtung zum Zu- und Abschalten der Mittragfunktion einer Mitlauf- oder Liftachse.**

(30) Priorität: **27.07.88 DE 3825408**

(43) Veröffentlichungstag der Anmeldung:
**31.01.90 Patentblatt 90/05**

(45) Bekanntmachung des Hinweises auf die
Patenterteilung:
**09.12.92 Patentblatt 92/50**

(84) Benannte Vertragsstaaten:
**CH DE FR IT LI NL SE**

(56) Entgegenhaltungen:
EP-A- 0 170 794      DE-A- 3 324 401
DE-A- 3 628 681      DE-C- 3 445 579
DE-U- 1 932 988      FR-A- 2 115 230
FR-A- 2 606 711      GB-A- 2 016 390

(73) Patentinhaber: **MAN Nutzfahrzeuge Aktiengesellschaft
Dachauer Strasse 667 Postfach 50 06 20
W-8000 München 50(DE)**

(72) Erfinder: **Eisermann, Günter
Würmstrasse 1c
W-8047 Karlsfeld(DE)**
Erfinder: **Kubisch, Peter
Niederrother Strasse 5
W-8061 Röhrmoos(DE)**
Erfinder: **Pointner, Wolfgang, Dipl.-Ing
Flurstrasse 4
W-8893 Hilgertshausen-Tandern(DE)**

EP 0 352 426 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Zu- und Abschalten der Mittragfunktion einer Mitlauf- oder Liftachse zur benachbarten (Bezugs-) Achse eines Fahrzeuges mit Merkmalen der im Oberbegriff des Anspruchs 1 angegebenen Art.

Die Erfindung geht aus von einem Stand der Technik gemäß EP-A-0 170 794. Dabei handelt es sich um ein mehrachsiges Fahrzeug, das über eine Achse und eine hierzu benachbarte Mitlauf- oder Liftachse verfügt. Die Mittragfunktion der Mitlauf- bzw. Liftachse wird automatisch bei Überschreiten eines zulässigen Belastungsgrenzwertes der Bezugsachse ausgelöst, und zwar mittels einer hierauf abgestellten Vorrichtung der im Oberbegriff des Anspruchs 1 angegebenen Art. Die bekannte Vorrichtung ist jedoch ausdrücklich (siehe Seite 12,1.Absatz der EP-A-0 170 794) darauf abgestellt, daß das automatische Absenken der Mitlaufbzw. Liftachse, d.h.das Auslösen deren Mittragfunktion nur dann erfolgen kann, wenn das Fahrzeug ganz oder nahezu stillsteht. Um diesen Fahrzustand zu melden, ist eigens ein entsprechendes Meßorgan vorgesehen. Das heißt, mit-der bekannten Einrichtung ist während der Fahrt defakto kein automatisches Auslösen der Mittragfunktion der Mitlaufbzw. Liftachse möglich. Damit ist es aber auch unmöglich, auf vom Fahrer unbemerkte Belastungsänderungen der Bezugsachse reagieren zu können, welche zum Beispiel an großen Steigungen durch Verrutschen oder Schwerpunktverlagerungen der Ladung entstehen können und eine Überlastung der Bezugsachse bewirken.

Hier setzt die Erfindung ein. Dabei galt es aber zunächst folgendes zu berücksichtigen. Bei Beladungszuständen eines Fahrzeuges, die nur ganz geringfügig unter oder über dem Belastungsgrenzwert der Bezugsachse liegen, konnten aus Sicht gebauter, somit auch bekannter Lösungen an Lastkraftwagen folgende Funktionsfehler auftreten. Bei unebener Fahrbahn führten die vertikalen Schwingbewegungen des Aufbaues gegenüber der (Bezugs-) Achse zu dynamischen Balgdruckschwankungen, durch die die Schaltschwelle eines durch den herrschenden Balgdruck beaufschlagten Druckschalters immer wieder überschritten wurde, was zwangsläufig zu einer unerwünschten Auslösung der Mittragfunktion der Mitlauf-oder Liftachse führte. Auch bei Kurvenfahrt wurde in dem besagten Belastungsgrenzfall durch Vergrößerung des Luftfeder-Balgdruckes am kurvenäußeren Rad der-(Bezugs-)Achse ebenfalls der Schaltdruck des Druckschalters überschritten, so daß auch in diesem Fall kurzfristig die Mittragfunktion der Mitlauf- oder Liftachse ausgelöst wurde. Systembedingt sank aber nach Aktivierung der Mittragfunktion der Mitlauf-oder Liftachse bei Rückfedern und/oder Einschwenken des Aufbaus in seine Normallage der Druck in den Luftfederbälgen der (Bezugs-) Achse wieder, wodurch ein Rückschalten des Druckschalters erfolgte und somit die Mittragfunktion der Mitlauf- oder Liftachse wieder außer Betrieb gesetzt wurde. Das heißt, immer dann, wenn die Beladung des Fahrzeuges im Bereich der maximal zulässigen Grenzbelastung der(Bezugs-)Achse lag, führte dieser Zustand zu einem Takten des Systems. Als Folge davon ergaben sich z.B. Defekte an den Magnetventilen, da diese dem teilweisen hochfrequenten Takten in besagten Grenzsituationen nicht gewachsen waren.

Es ist daher Aufgabe der Erfindung, eine Vorrichtung der eingangs genannten Art so weiterzubilden, daß bei Beladungszuständen des Fahrzeuges, die zu einer geringfügig unter der maximal zulässigen Grenzbelastung der (Bezugs-) Achse führen, die hierdurch während der Fahrt bedingten Schwingungen des Aufbaues gegenüber der (Bezugs-) Achse nicht zu einem Takten des Systems, also einem ständigen In- und Außer-Kraft-Setzen der Mittragfunktion der Mitlauf- oder Liftachse führen können.

Diese Aufgabe ist erfindungsgemäß bei einer Vorrichtung der gattungsgemäßen Art durch die Steuereinrichtung mit den im Kennzeichen des Anspruchs 1 angegebenen Merkmalen gelöst.

Vorteilhafte Einzelheiten dieser erfindungsgemäßen Lösung sind in den Unteransprüchen angegeben.

Die erfindungsgemäße Steuereinrichtung ist sowohl bei luftgefederten als auch blattgefederten Fahrzeugen anwendbar.

Mit dem erfindungsgemäßen Auswertorgan wertet die Steuereinrichtung die an beiden Seiten der (Bezugs-) Achse herrschenden Belastungen, welche erfaßt und ihm zugeführt werden, aus und setzt diese beiden Belastungswerte in ein Ausgangssignal um, das dem niedrigeren oder dem Mittelwert von beiden Belastungswerten entspricht. Dies bedeutet, daß auch bei einer Beladung des Fahrzeuges, die zu einer Belastung der (Bezugs-) Achse nahe dem maximal zulässigen Belastungsgrenzwert liegt, ein Durchfahren von Kurven und ein dadurch bedingtes kurzzeitiges kurvenaußenseitiges Überschreiten der maximal zulässigen Radbelastung infolge der Aufbauneigung nicht zu einem Auslösen der Mittragfunktion der Mitlauf- oder Liftachse führen kann.

Außerdem verfügt die erfindungsgemäße Steuereinrichtung aber auch über Organe, mit denen nur dann, wenn das vorgenannte Ausgangssignal des Auswertorganes dem zulässigen Belastungsgrenzwert der (Bezugs-) Achse entspricht bzw. diesen übersteigt und über eine festgelegte Mindestzeitdauer auftritt, die Mittragfunktion der Mitlauf- oder Liftachse in Gang gesetzt wird. Dies bedeutet wiederum, daß Beladungen des Fahrzeugs, die eine knapp unter dem maximal zulässigen Belastungsgrenzwert liegende Belastung der (Bezugs-) Achse bewirken und bei Fahrt, beispielsweise über unebene Fahrbahnen, bedingt durch das Schwingen des Aufbaues gegenüber der (Bezugs-) Achse zu einem kurzfristigen Übersteigen des zulässigen Belastungsgrenzwertes und ständigen Pendeln des meßtechnisch erfaßten Belastungswertes führen, ebenfalls keine Auslösung der Mittragfunktion der Mitlauf- oder Liftachse herbeiführen können. Diese Mittragfunktion wird automatisch nur dann ausgelöst, wenn der maximal zulässige Belastungsgrenzwert um einen so langen Zeitraum überschritten wird, der mindestens der in der Steuereinrichtung festgelegten Mindestzeitdauer entspricht.

Darüber hinaus verfügt die erfindungsgemäße Steuereinrichtung über einen elektrischen Speicher, mit dem sichergestellt ist, daß die Mitlauf- oder Liftachse auch dann in Mittragwirkung gehalten bleibt, wenn nach erfolgter Auslösung der Mittragfunktion die Belastung der (Bezugs-) Achse wieder auf einen Wert absinkt, der unter dem zulässigen Belastungsgrenzwert liegt. Das heißt, auch ein diesbezüglich von den anderen Organen der Steuereinrichtung aufgrund dieses neuen Zustandes ausgegebener Befehl für eine Abschaltung der Mittragfunktion der Mitlauf- oder Liftachse kann nicht wirksam werden. Dieses Abschalten der Mittragfunktion der Mitlauf- oder Liftachse kann dann nur vom Fahrer ausgelöst werden, wozu die erfindungsgemäße Steuereinrichtung entsprechende vom Fahrer zu betätigende Mittel aufweist.

Auf diese Weise ist mit vergleichsweise einfachen Mitteln ein einwandfreies In- und Außerkraftsetzen der Mittragfunktion der Mitlauf- oder Liftachse auch in Beladungsgrenzsituationen gewährleistbar.

Nachstehend ist die erfindungsgemäße Vorrichtung anhand mehrerer in der Zeichnung dargestellter Ausführungsbeispiele noch näher erläutert. In der Zeichnung zeigen:

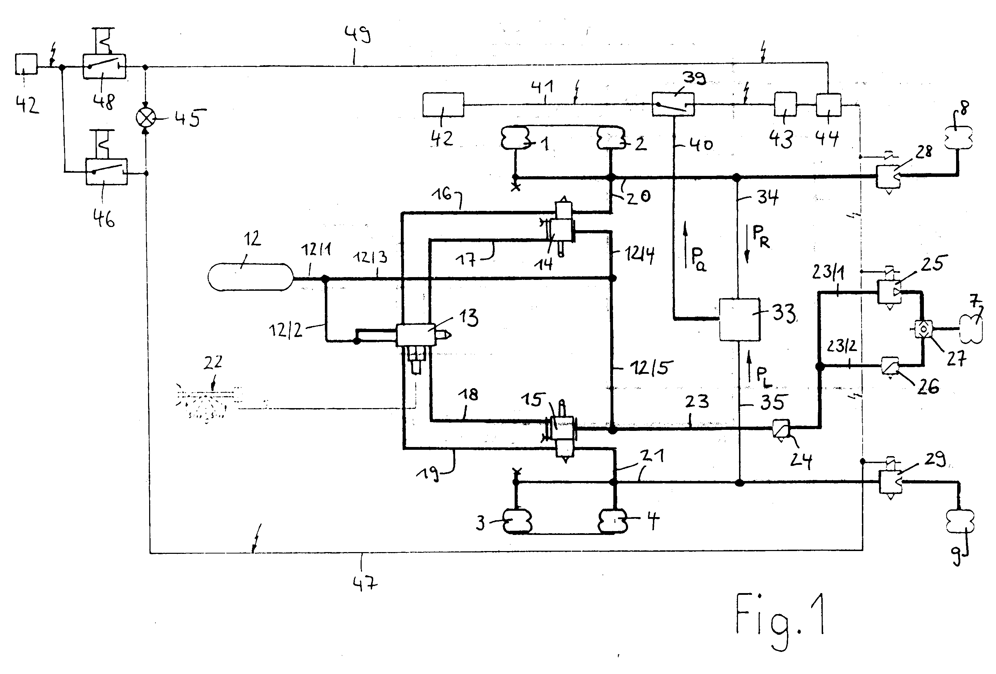

Fig. 1 bis 5     je ein Ausführungsbeispiel der erfindungsgemäßen Vorrichtung als Schaltplan.

In den Figuren sind gleiche bzw. einander entsprechende Bauteile mit gleichen Bezugszeichen angezogen.

In den Figuren ist von einem Fahrzeug jeweils nur das Schaltschema betreffend die Federung einer nachstehend "Bezugsachse" genannten Achse und der Einrichtung zur Aktivierung bzw. Deaktivierung der Mittragfunktion einer zur Bezugsachse benachbarten Mitlauf- oder Liftachse gezeigt. Die Mitlauf- bzw. Liftachse kann vor oder hinter der Bezugsachse am Fahrzeug angeordnet sein.

Den Figuren 1, 3 und 5 liegt als Beispiel ein Fahrzeug mit luftgefederter Bezugsachse zugrunde, wobei die beiden auf deren einer Seite angeordneten Luftfederbälge mit 1 und 2 und deren auf der gegenüberliegenden Seite angeordnete Luftfederbälge mit 3 und 4 bezeichnet sind.

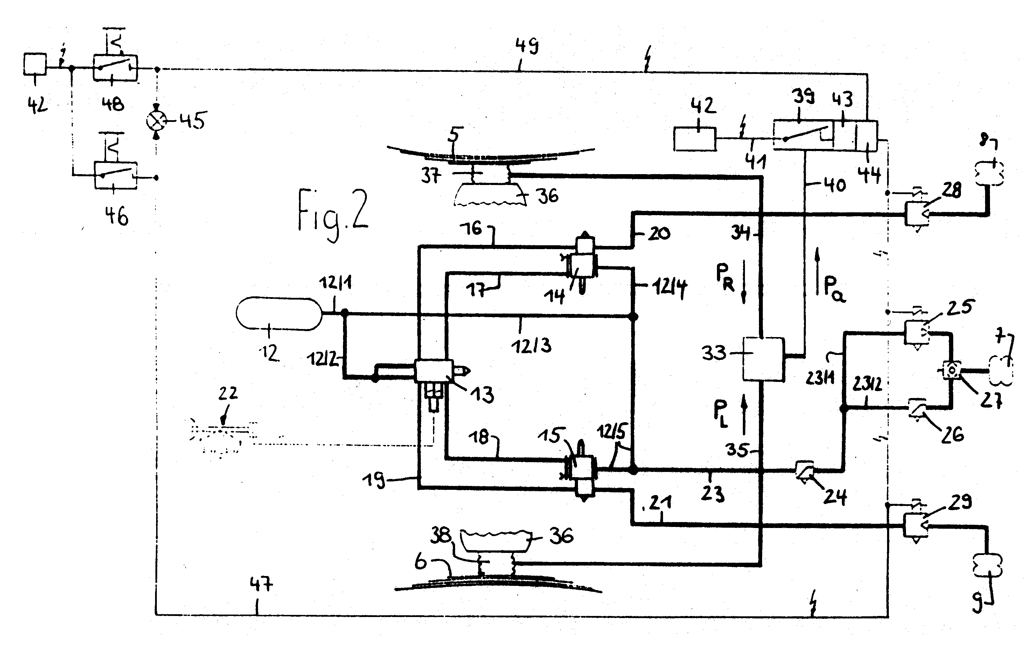

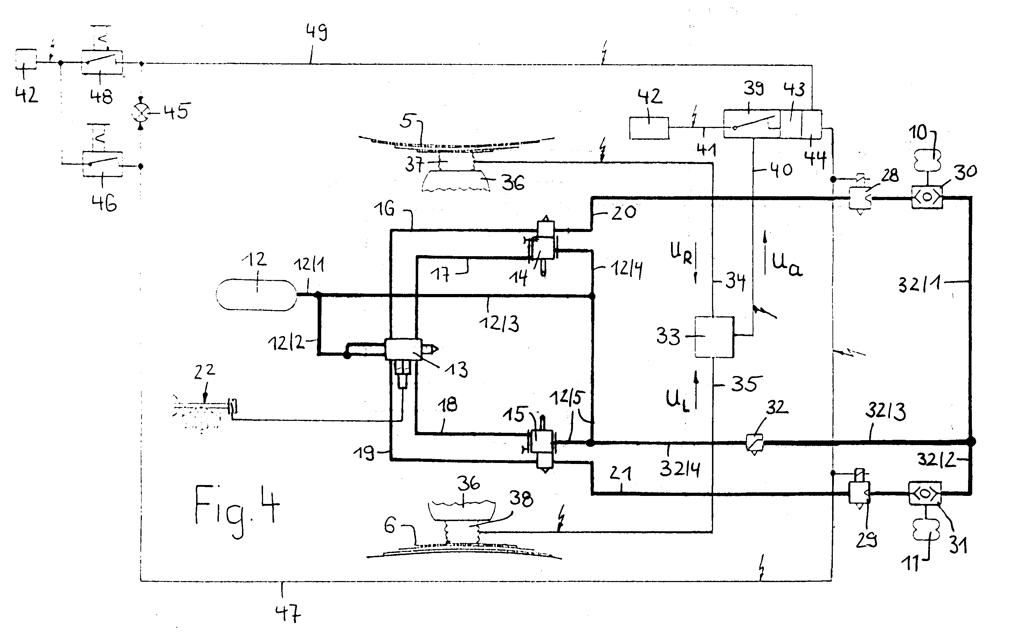

Den Ausführungsbeispielen gemäß Figur 2 und 4 liegt ein Fahrzeug mit blattgefederter Bezugsachse zugrunde, wobei die auf deren einer Seite angeordnete Blattfeder mit 5 und die auf deren anderer Seite angeordnete Blattfeder mit 6 bezeichnet ist.

Bei dem Fahrzeug gemäß den Figuren 1 und 2 ist der Bezugsachse eine Liftachse zugeordnet, deren zum Liften und Absenken dienendes druckmittelbetätigtes, hier druckluftbetätigtes Liftorgan mit 7 und deren beide die Mittragfunktion bewirkende Organe, hier Luftfederbälge, mit 8 bzw. 9 bezeichnet sind.

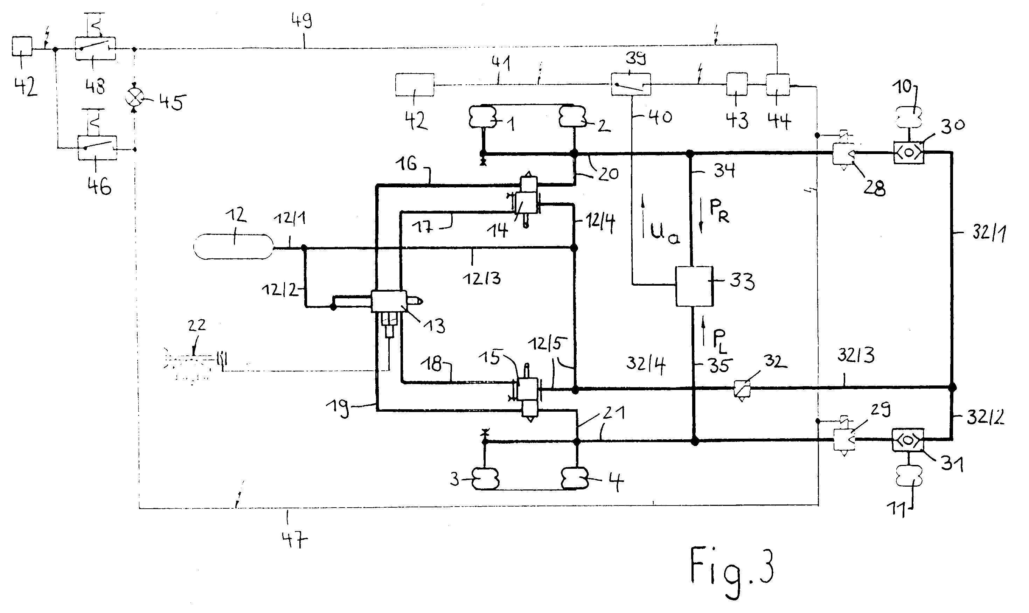

Bei den Fahrzeugen gemäß Figuren 3 bis 5 ist der Bezugsachse eine Mitlaufachse zugeordnet, deren beide die Mittragfunktion bewirkende Organe, hier Luftfederbälge, mit 10 bzw. 11 bezeichnet sind.

Die Druckluftanlage des Fahrzeuges besteht aus wenigstens einem Druckluftbehälter 12, an den in bekannter Weise über Druckmittelzuleitungen 12/1, 12/2, 12/3, 12/4 und 12/5 ein Wechsel-Lade-Ventil 13 sowie zwei Niveauregelventile 14 bzw. 15 mit ihren Versorgungseingängen angeschlossen sind. Jedes der beiden Niveauregelventile 14, 15 steht über Druckluftsteuerleitungen 16, 17 bzw. 18, 19 mit dem Wechsel-Lade-Ventil 13 in Verbindung. Am Niveauregelventil 14 sind im Fall der Ausführungsbeispiele gemäß den Figuren 1, 3 und 5 über eine Druckmittelsteuerleitung 20 sowohl die der einen Seite der Bezugsachse zugeordneten Luftfederbälge 1, 2 als auch der der einen Seite der Lift- oder Mitlaufachse zugeordnete Luftfederbalg 8 angeschlossen, während im Fall der Figuren 2 und 4 über die Druckluftsteuerleitung 20 am Niveauregelventil 14 nur der an einer Seite der Mitlauf- bzw. Liftachse angeordnete Luftfederbalg 8 bzw. 10 angeschlossen ist. Am Niveauregelventil 15 sind über eine Druckluftsteuerleitung 21 im Fall der Figuren 1, 3 und 5 sowohl die an der anderen Seite der Bezugsachse angeordneten Luftfederbälge 3 bzw. 4 als auch der auf der anderen Seite der Mitlauf- bzw. Liftachse angeordnete Luftfederbalg 9 bzw. 11 angeschlossen, während im Fall der Figuren 2 und 4 über die Druckluftsteuerleitung 21 lediglich der Luftfederbalg 9 bzw. 11 der Mitlauf- bzw. Liftachse am Niveauregelventil 15 angeschlossen ist.

Das Wechsel-Lade-Ventil 13 bekommt seine elektrischen Steuerbefehle von einem beispielsweise am Armaturenbrett oder im Bereich des Fahrersitzes angeordneten, vom Fahrer manuell betätigbaren Hebe/Senk-Steuerschalter 22. Aufbau und Funktion dieses Steuerschalters 22 ist ebenso bekannt wie jener des angeschlossenen Wechsel-Lade-Ventiles 13 und der daran angeschlossenen Niveauregelventile 14, 15, und zwar für die Niveauregelung eines Nutzfahrzeuges, siehe beispielsweise die DE-A 34 45 579.

Die Liftvorrichtung gemäß Fig. 1 und 2, mit der das Anheben bzw. Absenken der Liftachse bewerkstelligbar ist, besteht außer dem bereits erwähnten Liftorgan 7 aus einer an einer Druckmittelversorgung, hier der fahrzeugintern bereits vorhandenen Druckluftversorgung 12, direkt oder beispielsweise von der zu einem der Niveauregelventile 14, 15 hinführenden Druckluftversorgungsleitung 12/4 bzw. 12/5 abzweigenden Druckmittelzufuhrleitung 23, in die ein den Maximaldruck (auf beispielsweise 7,4 bar) begrenzendes Druckbegrenzungsventil 24 und daran anschließend, in zwei parallelgeschalteten Zweigen 23/1 und 23/2, im einen Zweig 23/1 ein Magnetventil 25 und im anderen Zweig 23/2 ein nach Entlüftung des Liftorganes 7 in diesem einen Restdruck (von etwa 0,7 bar) sicherstellendes Restdruckbegrenzungsventil 26 sowie an der liftorganseitigen Verknüpfungsstelle ein Wechselschaltventil 27 eingeschaltet sind. Das Magnetventil 25 erhält seine elektrischen Schaltbefehle von der gleichen Steuereinrichtung und mit gleichen Signalen, mit denen auch die beiden in jeweils eine der zu den Organen 8, 9 (Luftfederbälge) hinführende Druckluftsteuerleitung 20 bzw. 21 eingeschalteten Magnetventile 28 bzw. 29 angesteuert werden. Die Magnetventile 25, 28 und 29 haben je zwei Schaltstellungen, nämlich eine Druckmittel zum Organ 7 bzw. 8 bzw. 9 durchlassende Durchlaßstellung und eine die Druckmittelzuführung unterbrechende sowie das Organ 7 bzw. 8 bzw. 9 entlastende Sperrstellung. Die Beschaltung ist im Fall der Liftachse so, daß dann, wenn sich die Magnetventile 28 und 29 in Durchlaßposition befinden, also die Mittragfunktion der Liftachse aktiviert ist, sich das Magnetventil 25 der Lifteinrichtung in entlüftender Sperrstellung befindet, d.h. das Organ 7 entlastet wird und sich die Liftachse aufgrund der Druckerhöhung in den Organen 8, 9 (Luftfederbälge) absenken kann.

Die beiden Magnetventile 28, 29 sind in gleicher Weise auch im Fall der Mitlaufachse gemäß den Figuren 3 bis 5 vorhanden, jedoch ist bei jedem dieser Fälle in den zwischen Magnetventil 28 und Organ 10 (Luftfederbalg) verlaufenden Teil der Druckmittelsteuerleitung 20 ein Wechselschaltventil 30 und in den zwischen Magnetventil 29 und Organ 11 (Luftfederbalg) verlaufenden Teil der Druckmittelsteuerleitung 21 ein Wechselschaltventil 31 eingeschaltet. Beide Wechselschaltventile 30, 31 sind über eine gemeinsame Entlastungsleitung 32/1, 32/2, 32/3 mit einem gemeinsamen Restdruckbegrenzungsventil 32 verbunden, das nach einer Entlastung der Organe 10, 11 (Luftfederbälge) in diesen jeweils einen Restdruck (von beispielsweise 0,3 bar) sicherstellt und speiseseitig über einen Leitungsabschnitt 32/4 an der Druckmittelversorgung angeschlossen ist.

Wenn sich die Magnetventile 28, 29 in Durchlaßstellung befinden, dann kann die in den Druckmittelsteuerleitungen 20 bzw. 21 anstehende Druckluft zu den Organen 8, 9 bzw. 10, 11 strömen, wodurch die Mittragfunktion der Mitlauf- oder Liftachse in Gang gesetzt wird und so lange erhalten bleibt, bis die Magnetventile 28, 29 wieder in ihre entlastende Sperrposition zurückgeschaltet werden.

Für eine funktionssichere Beherrschung des In- und Außerkraftsetzens der Mittragfunktion der Mitlauf- oder Liftachse ist eine Steuereinrichtung vorgesehen. Diese weist unter anderem ein Auswertorgan 33 auf, mit dem die an beiden Außenbereichen der Bezugsachse herrschenden und ihm in Form entsprechender Signale $P_R$, $P_L$ bzw. $U_R$, $U_L$ zugeführten Belastungen (Radbelastungen) ausgewertet und ein Ausgangssignal $P_a$ bzw. $U_a$ umgesetzt werden, das dem niedrigeren der beiden erfaßten Belastungswerte oder dem hieraus gebildeten arithmetischen Mittelwert entspricht. Bei diesem Auswertorgan 33 der Steuereinrichtung kann es sich um ein sogenanntes Select-Low-Ventil handeln, das die an beiden Seiten der Bezugsachse herrschenden Belastungen in Form entsprechender pneumatischer Drücke $P_R$, $P_L$ zugeführt bekommt und in ein pneumatisches Ausgangssignal $P_a$ umsetzt, das dem niedrigeren der beiden erfaßten Belastungsdruckwerte entspricht. Das besagte Auswertorgan 33 der Steuereinrichtung kann alternativ jedoch auch durch eine elektrische bzw. elektronische Select-Low-Schaltung realisiert sein, die die an beiden Seiten der Bezugsachse herrschenden Belastungen in Form entsprechender pneumatischer Drücke $P_R$, $P_L$ oder schon in Form analoger oder digitaler elektrischer Signale $U_R$, $U_L$ zugeführt bekommt und ein entsprechendes Ausgangssignal $U_a$ erzeugt, das dem niedrigeren der beiden zugeführten Belastungswerte entspricht.

Wenn es sich bei dem Auswertorgan 33 um einen Mittelwertbildner handelt, so kann die Signalzuführung gleich wie im Fall eines Select-Low-Ventils oder einer Select-Low-Schaltung sein; im Unterschied hierzu erscheint lediglich ein für den Mittelwert der zugeführten Meßsignale repräsentatives Ausgangssignal $P_a$ bzw. $U_a$ am Ausgang.

Bei luftgefederter Bezugsachse können die je Seite derselben herrschenden Belastungen pneumatisch direkt entweder in den Luftfederbälgen 1, 2 bzw. 3, 4 oder den zu diesen hinführenden Druckluftsteuerleitungen 20 bzw. 21 abgegriffen und in Form von Druckwerten $P_R$ bzw. $P_L$ über je eine Meßsignalzuleitung 34 bzw. 35 dem Auswertorgan 33 zugeführt werden. Bei blattgefederter Bezugsachse werden die je Seite derselben herrschenden Belastungen mittels geeigneter, beispielsweise jeweils zwischen Blattfeder 5 bzw. 6 und Achskörper 36 angeordneter Meßwertaufnehmer 37 bzw. 38 aufgenommen und dem Auswertorgan 33 über die Meßsignalzuleitungen 34 bzw. 35 zugeführt.

Des weiteren weist die erfindungsgemäße Steuereinrichtung auch noch Organe auf, mit denen dann, wenn das besagte Ausgangssignal $P_a$ bzw. $U_a$ des Auswertorganes 33 dem zulässigen Belastungsgrenzwert der Bezugsachse entspricht bzw. diesen übersteigt und über eine festgelegte Mindestzeitdauer auftritt, die Mittragfunktion der Mitlauf- oder Liftachse in Gang gesetzt wird. Eines dieser weiteren Organe ist ein hydraulisch oder pneumatisch oder elektrisch betätigbarer Grenzwertschalter 39, dem im Fall der Beispiele gemäß Fig. 1 bis 4 über eine Steuerleitung 40 das am Auswertorgan 33 erscheinende Ausgangssignal $P_a$ bzw. $U_a$ zugeführt und der hierdurch nur dann betätigt wird, wenn dieses Ausgangssignal $P_a$ bzw. $U_a$ dem an der Bezugsachse zulässigen Belastungsgrenzwert entspricht bzw. einen demgegenüber größeren Wert angenommen hat. Dieser Grenzwertschalter 39 ist in eine von ihm zu schließende bzw. zu unterbrechende elektrische Steuerleitung 41 eingeschaltet und dient den Magnetventilen 28, 29 sowie 25 als gemeinsames Schaltorgan.

Die Steuerleitung 41 ist an einer Einrichtung 42, z.B. einer Spannungsquelle, angeschlossen, von der ein die Umschaltung der Magnetventile 25, 28, 29 bewirkendes elektrisches Signal bereitstellbar ist.

Zum Zweck der Erfassung der Zeitdauer, in der das besagte Ausgangssignal $P_a$ bzw. $U_a$ auftritt, dient eine elektrische bzw. elektronische Zeiterfassungsschaltung 43. Diese erfaßt die Zeitdauer eines für das Erreichen bzw. Übersteigen des zulässigen Belastungsgrenzwertes repräsentativen Signales $P_a$ bzw. $U_a$ und vergleicht diese Zeitdauer mit einer in ihr festgelegten, gegebenenfalls veränderlich einstellbaren Mindestzeitdauer, und läßt nur dann, wenn letztere überschritten wird, ein von der Einrichtung 42 kommendes, den Schaltzustand der Magnetventile 28, 29 und 25 änderndes Steuersignal für Inbetriebnahme der Mittragfunktion der Mitlauf-bzw. Liftachse über einen elektronischen Speicher 44 zu den hieran angeschlossenen Magnetventilen 25, 28, 29 durch. Der Speicher 44 dient dazu, daß das die Mittragfunktion der Mitlauf- oder Liftachse bewirkende Steuersignal auch dann am jeweiligen Magnetventil 28, 29 und gegebenenfalls 25 ansteht, wenn der zulässige Belastungsgrenzwert an der Bezugsachse wieder unterschritten wird.

Das Mittragen der Mitlauf- bzw. Liftachse wird dem Fahrer am Armaturenbrett durch eine Anzeige bzw. Signalleuchte 45 aufgezeigt.

Die Mittragfunktion der Mitlauf- bzw. Liftachse kann vom Fahrer aber auch unabhängig von der vorbeschriebenen Automatik in Gang gesetzt werden, und zwar durch Betätigung eines armaturenbrettseitigen Schalters 46, worauf dann von der Einrichtung 42 ein entsprechendes Steuersignal über eine Handschaltleitung 47 zu den daran angeschlossenen Magnetventilen 28, 29, 25 gelangt.

Ist die Mittragfunktion der Mitlauf- bzw. Liftachse einmal durch die Automatik in Gang gesetzt, so kann dieses Mittragen aber erst dann vom Fahrer durch Betätigung eines am Armaturenbrett bzw. im Fahrersitzbereich angeordneten Schalters 48 wieder außer Kraft gesetzt werden, wenn dem Speicher 44 ein Schaltzustand mitgeteilt ist, der repräsentativ dafür ist, daß die Bezugsachse nicht mehr bis zum zulässigen Belastungsgrenzwert belastet ist, was beispielsweise nach einem teilweisen oder vollständigen Entladen des Fahrzeugs der Fall ist. Ist dem Speicher 44 dieser Zustand signalisiert, dann kann dessen das Ausschalten der Mittragfunktion bislang verhindernder Speicherinhalt durch ein Betätigen des Schalters 48 und ein dadurch über eine Leitung 49 zugeführtes Signal gelöscht werden.

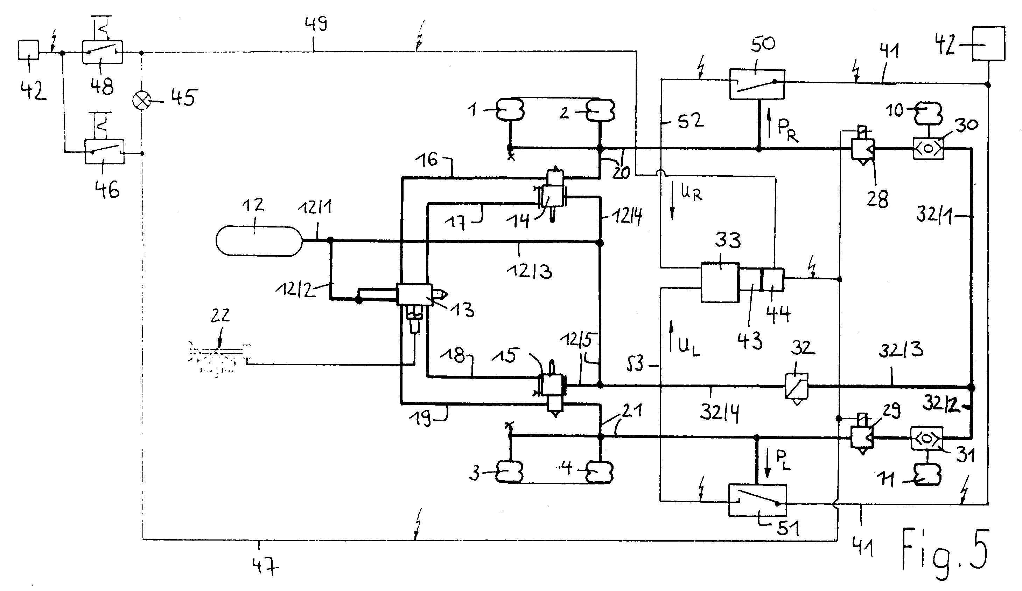

Im Fall von Fig. 5 sind im Gegensatz zu den anderen Fällen statt des dortigen einzigen Grenzwertschalters 39 zwei entsprechende Grenzwertschalter 50 und 51 vorgesehen, wobei jeder die Belastung einer Seite der Bezugsachse als repräsentatives Signal $P_R$ bzw. $P_L$ zugeführt bekommt. Sobald eines der Signale $P_R$ bzw. $P_L$ repräsentativ für einen die zulässige Grenzbelastung übersteigenden Wert ist, wird der diesbezügliche Grenzwertschalter 50 bzw. 51 geschlossen und ein über die Leitung 41 von der Einrichtung 42 her anstehendes Signal über eine elektrische Leitung 52 bzw. 53 als Signal $U_R$ oder $U_L$ dem Auswertorgan 33 zugeführt und von diesem als Ausgangssignal an das Zeiterfassungsorgan 43 weitergeleitet. Die Weiterbehandlung dieses Signales entspricht dann jener der Fälle gemäß Fig. 1 bis 4, weil danach und auch im übrigen schaltungsmäßigen Aufbau Identität gegeben ist.

Bauteilmäßig ist es möglich, das Auswertorgan 33, das elektronische Zeiterfassungsorgan 43 und den elektronischen Speicher 44 für sich gesehen oder gegebenenfalls auch mit dem bzw. einen der Druckschalter 39 bzw. 50 bzw. 51 in einem Bauteil zusammenzufassen.

**Patentansprüche**

1. Vorrichtung zum Zu- und Abschalten der Mittragfunktion einer Mitlauf-oder Liftachse zur benachbarten Achse eines Fahrzeuges, wobei zu jedem die Mittragfunktion bewirkenden Organ (7, 8, 9; 10, 11) eine an einer Druckmittelversorgung (12) angeschlossene Druckleitung (20, 21; 23, 23/1) hinführt, in die ein Magnetventil (28, 29; 25) eingeschaltet ist, und mit einer Steuereinrichtung, mit der die an beiden Seiten der Achse herrschenden Belastungen ausgewertet und von der bei Erreichen bzw. Überschreiten der zulässigen Grenzbelastung der Achse die Mittragfunktion der Mitlauf- bzw. Liftachse mittels eines elektrischen, das Magnetventil (28, 29; 25) betätigenden Signals auslösbar ist wobei die Steuereinrichtung eine Schalteinrichtung (46) aufweist, mit der vom Fahrer die Mittragfunktion der Mitlauf- bzw. Liftachse generell auch dann in Kraft setzbar ist, wenn die Belastung der Achse unterhalb des zulässigen Belastungsgrenzwertes liegt, dadurch gekennzeichnet, daß die Steuereinrichtung dahingehend ausgelegt ist, daß bei geringfügig unter der maximal zulässigen Grenzbelastung der Achse liegenden Beladungen des Fahrzeugs die hierdurch während der Fahrt bedingten Schwingungen des Aufbaus gegenüber der Achse nicht zu einem Takten des Systems, also einem ständigen In- und Außer-Kraft-Setzen der Mittragfunktion der Mitlauf- bzw. Liftachse führen können, und hierzu

    a) mit einem Auswertorgan (33) die an beiden Seiten der Achse herrschenden, und ihm übermittelten Belastungen ($P_R$, $P_L$; $U_R$, $U_L$) auswertet und in ein Ausgangssignal ($P_a$; $U_a$) umsetzt, das dem niedrigeren der beiden Belastungswerte oder dem hieraus gebildeten Mittelwert entspricht,

    b) mit anderen Organen dann, wenn das besagte Ausgangssignal ($P_a$; $U_a$) als den zulässigen Belastungsgrenzwert der Achse übersteigend und als über eine festgelegte Mindestzeitdauer auftretend erkannt wird, das Auslösen der Mittragfunktion der Mitlauf- bzw. Liftachse bewirkt und diesen Zustand einem elektronischen Speicher (52) mitteilt,

    c) mit dem Speicher (52) die aktivierte Mittragfunktion der Mitlauf- bzw. Liftachse auch dann aufrecht hält, wenn das besagte Ausgangssignal ($P_a$ bzw. $U_a$) einen wieder unterhalb des zulässigen Belastungsgrenzwertes der (Bezugs-) Achse liegenden Wert repräsentiert, und

    d) eine Schalteinrichtung (48, 49) aufweist, mit der vom Fahrer der die automatisch ausgelöste Mittragfunktion der Mitlauf- bzw. Liftachse aufrechthaltende Speicherzustand des Speichers (52) dann löschbar ist, wenn das besagte Ausgangssignal ($P_a$ bzw. $U_a$) einen wieder unterhalb des zulässigen Belastungsgrenzwertes der Achse liegenden Wert repräsentiert.

**2.** Vorrichtung nach Anspruch 1, dadurch gekennzeichnet, daß das Auswertorgan (33) der Steuereinrichtung ein Select-Low-Ventil oder eine Select-Low-Schaltung ist, das bzw. die die an beiden Seiten der Achse herrschenden Belastungen in Form entsprechend übermittelter Meßwerte ($P_R$, $P_L$; $U_R$, $U_L$) zugeführt bekommt und hieraus ein Ausgangssignal ($P_a$; $U_a$) erzeugt, das dem niedrigeren der beiden Belastungsmeßwerte ($P_R$, $P_L$; $U_R$, $U_L$) entspricht.

**3.** Vorrichtung nach Anspruch 1, dadurch gekennzeichnet, daß das Auswertorgan (33) der Steuereinrichtung ein Mittelwertbildner ist, der die an beiden Seiten der Achse herrschenden Belastungen in Form entsprechend übermittelter Meßwerte ($P_R$, $P_L$; $U_R$, $U_L$) zugeführt bekommt und hieraus ein Ausgangssignal ($P_a$; $U_a$) erzeugt, das dem arithmetischen Mittelwert der beiden Belastungsmeßwerte ($P_R$, $P_L$; $U_R$, $U_L$) entspricht.

**4.** Vorrichtung nach einem der Ansprüche 2 und 3, dadurch gekennzeichnet, daß bei Fahrzeugen mit luftgefederter Achse die je Seite derselben herrschenden Belastungen ($P_R$, $P_L$) direkt an bzw. in den dort gegebenen Luftfederbälgen (1, 2; 3, 4) oder den zu diesen hinführenden Anschluß- oder Drucklaftsteuerleitungen (20; 21) abgegriffen und in Form pneumatischer Meßwerte über Meßzuleitungen (34, 35) dem Auswertorgan (33) zugeführt werden.

**5.** Vorrichtung nach einem der Ansprüche 2 und 3, dadurch gekennzeichnet, daß bei Fahrzeugen mit blattgefederter Achse die je Seite derselben herrschenden Belastungen ($P_R$, $P_L$) mittels geeigneter Meßwertaufnehmer (37, 38) erfaßt und von diesen dem Auswertorgan (33) über Meßwertzuleitungen (34, 35) zugeführt werden.

**6.** Vorrichtung nach einem der vorhergehenden Ansprüche, dadurch gekennzeichnet, daß das am Auswertorgan (33) der Steuereinrichtung erscheinende Ausgangssignal ($P_a$; $U_a$) einem Grenzwertschalter (39) zugeführt wird, der nur dann, wenn das Ausgangssignal ($P_a$; $U_a$) den zulässigen Belastungsgrenzwert für die Achse erreicht bzw. übersteigt, betätigt wird und einerseits an eine die Mittragsfunktion der Mitlauf- bzw. Liftachse bewirkende Signalbereitstellungseinrichtung (42), andererseits an eine elektrische bzw. elektronische Zeiterfassungseinrichtung (43) angeschlossen ist, der wiederum der elektronische Speicher (44) nachgeordnet ist.

**7.** Vorrichtung nach einem der Ansprüche 1 bis 5, dadurch gekennzeichnet, daß zwei Grenzwertschalter (50, 51) vorgesehen sind, von denen jeder die an einer Seite der Achse herrschende Belastung erfaßt und bei Erreichen bzw. Überschreiten des zulässigen Belastungsgrenzwertes von dem entsprechenden Signal betätigt wird, worauf ein Signal ($U_R$; $U_L$) zum angeschlossenen Auswertorgan (33) gelangt, das ein Ausgangssignal ($U_a$) erzeugt, welches einer elektrischen bzw. elektronischen Zeiterfassungseinrichtung (43) zugeführt wird, der der elektronische Speicher (44) nachgeordnet ist, welcher außerdem an eine die Mittragfunktion der Mitlauf- bzw. Liftachse bewirkende Signalbereitstellungseinrichtung (42) angeschlossen ist.

**8.** Vorrichtung nach einem der Ansprüche 1, 6 und 7, dadurch gekennzeichnet, daß die Zeiterfassungseinrichtung (43) die Zeitdauer eines für das Erreichen bzw. Übersteigen des zulässigen Belastungsgrenzwertes der Achse repräsentativen Signales erfaßt und mit einer in ihr festgelegten, gegebenenfalls veränderlich einstellbaren Mindestzeitdauer vergleicht und nur dann, wenn letztere überschritten wird,
- ein den Schaltzustand der nachgeschalteten Magnetventile (28, 29; 25) änderndes Steuersignal für die Inbetriebnahme der Mittragfunktion der Mitlauf- bzw. Liftachse wirksam werden läßt, sowie
- ein Signal erzeugt, mit dem der elektronische Speicher (44) dahingehend aktiviert wird, daß das die Mittragfunktion der Mitlauf- oder Littachse bewirkende Steuersignal auch dann an den Magnetventilen (28, 29; 25) ansteht, wenn der zulässige Belastungsgrenzwert der Achse wieder unterschritten wird.

**9.** Vorrichtung nach einem der Ansprüche 1, 6 und 7, dadurch gekennzeichnet, daß die Mittragfunktion de Mitlauf- bzw. Liftachse durch Änderung des Schaltzustandes der Magnetventile (28, 29; 25) bewirkende, von der Signalbereitstellungseinrichtung (42) abzugebende elektrische Steuersignal auch über eine, durch manuelle Betätigung eines am Armaturenbrett bzw. Fahrersitzbereich angeordneten Schalters (46) durchgeschaltete Steuerleitung (47) bereitstellbar ist, und daß durch Unterbrechen dieser Steuerleitung (47) mittels des besagten Schalters (46) die Mittragfunktion der Mitlauf- bzw. Liftachse wieder außer Kraft setzbar ist.

**10.** Vorrichtung nach Anspruch 1, dadurch gekennzeichnet, daß der die Mittragfunktion der Mitlauf- bzw. Liftachse aufrechterhaltende Speicherzustand des Speichers (44) löschbar ist, und zwar durch manuelle Betätigung eines am Armaturenbrett bzw. im Fahrersitzbereich angeordneten Schalters (48) und entsprechende Übertragung eines Signales über eine Leitung (49).

**11.** Vorrichtung nach einem der vorhergehenden Ansprüche, dadurch gekennzeichnet, daß am Armaturenbrett oder im Fahrersichtbereich eine Kontrollleuchte oder -Anzeige (45) gegeben ist, durch die der Fahrer über den Lagezustand der Mitlauf- bzw. Liftachse informiert wird.

**Claims**

**1.** Device for connecting and disconnecting the auxiliary carrying function of a non-driven or raisable axle to and from the adjacent axle of a vehicle, with a pressure line (20; 21; 23, 23/1) connected to a pressure medium supply (12) and to each organ (7, 8, 9; 10, 11) effecting the auxiliary carrying function, into which pressure line is integrated a solenoid valve (28, 29; 25), and which device is equipped with a control device used to evaluate the loads occurring on either side of the axle and to trigger, by means of an electrical signal actuating the solenoid valve (28, 29; 25), the auxiliary carrying function of the non-driven or raisable axle once the axle's permissible limit load is reached or exceeded, the control device having a switching device (46) with which the driver can switch on the auxiliary carrying function of the non-driven or raisable axle even if the axle load is below the permissible load limit value, and which device is characterised by the fact that the control device is designed in such a way that if vehicle loads are slightly below the maximum permissible limit load of the axle, the resulting vibrations of the body in relation to the axle do, during the journey, not lead to a continuous switching on and off of the auxiliary carrying function of the non-driven or raisable axle, and to which end it
   a) evaluates, by means of an evaluation organ (33), the loads ($P_R$, $P_L$, $U_R$, $U_L$) occurring on either side of the axle and transmitted to it and converts them into an output signal ($P_a$; $U_a$) that corresponds to either the lower of the two load values or the mean value calculated from them,
   b) triggers, together with other organs, the auxiliary carrying function of the non-driven or raisable axle and communicates this status to an electronic memory (52) if the said

output signal ($P_a$; $U_a$) is recognised as exceeding both the permissible load limit value of the axle and as occurring for longer than a determined minimum period of time,

c) maintains the activated auxiliary carrying function of the non-driven or raisable axle by means of the memory (52) even if the said output signal ($P_a$ and $U_a$) represents a value again below the permissible load limit value of the axle, and

d) is equipped with a switching device (48, 49) with which the driver can erase the memory status of the memory (52) which maintains the automatically triggered auxiliary carrying function of the non-driven or raisable axle if the said output signal ($P_a$ and $U_a$) represent a value again below the permissible load limit value of the axle.

2. Device as under Claim 1, characterised by the fact that the evaluation organ (33) of the control device is a select low valve or a select low circuit which receives in the form of correspondingly transmitted measured values ($P_R$, $P_L$; $U_R$, $U_L$) the loads occurring on either side of the axle and uses them to generate an output signal ($P_a$; $U_a$) corresponding to the lower of the two measured load values ($P_R$, $P_L$; $U_R$, $U_L$).

3. Device as under Claim 1, characterised by the fact that the evaluation organ (33) of the control device is a mean-value calculator which receives in the form of correspondingly transmitted measured values ($P_R$, $P_L$; $U_R$, $U_L$) the loads occurring on either side of the axle and uses them to generate an output signal ($P_a$; $U_a$) corresponding to the arithmetic mean value of the two measured load values ($P_R$, $P_L$; $U_R$, $U_L$).

4. Device as under one of the Claims 2 and 3, characterised by the fact that in vehicles with air-suspended axle the loads ($P_R$, $P_L$) occurring on either side of said axle are recorded directly on or in the air bellows (1, 2; 3,4) present there or on/in the connection or compressed-air control lines (20; 21) leading to them and fed to the evaluation organ (33) via measurement supply lines (34, 35) in the form of pneumatic measured values.

5. Device as under one of the Claims 2 and 3, characterised by the fact that in vehicles with leaf-sprung axle the loads ($P_R$, $P_L$) occurring on either side of said axle are registered by means of suitable measuring sensors (37, 38) which then feed them to the evaluation organ (33) via measured value supply lines (34, 35).

6. Device as under one of the previous Claims, characterised by the fact that the output signal ($P_a$; $U_a$) provided at the evaluation organ (33) of the control device is fed to a limit value switch (39) which is not actuated unless the output signal ($P_a$; $U_a$) reaches or exceeds the permissible load limit value for the axle and is, on the one hand, connected to a signal providing device (42) effecting the auxiliary carrying function of the non-driven or raisable axle and, on the other hand, to an electric or electronic time measuring device (43), downstream of which in turn the electronic memory (44) is connected.

7. Device as under one of the Claims 1 to 5, characterised by the fact that two limit value switches (50, 51) are provided, each of which registers the load occurring on one side of the axle and, when the permissible load limit value is reached or exceeded, is actuated by the corresponding signal, whereupon a signal ($U_R$, $U_L$) is sent to the connected evaluation organ (33) that generates an output signal ($U_a$) which is fed to an electric or electronic time measuring device (43), downstream of which is connected the electronic memory (44) that is also connected to a signal providing device (42) effecting the auxiliary carrying function of the non-driven or raisable axle.

8. Device as under one of the Claims 1, 6 and 7, characterised by the fact that the time measuring device (43) registers the duration of a signal representative of the reaching or exceeding of the permissible load limit value of the axle and compares it with a minimum duration determined in said device, which duration may be variably adjustable, and, only if the latter is exceeded,

- prompts a control signal which, in order to set the auxiliary carrying function of the non-driven or raisable axle into operation, changes the operating status of the solenoid valves (28, 29; 25) connected downstream and

- generates a signal that activates the electronic memory (44) in such a way that the control signal triggering the auxiliary carrying function of the non-driven or raisable axle is present at the solenoid valves (28, 29; 25) even if the measured load value of the axle again falls below the permissible load limit value.

9. Device as under one of the Claims 1, 6 and 7, characterised by the fact that the electrical control signal which triggers the auxiliary carrying function of the non-driven or raisable axle by changing the operating status of the solenoid valves (28, 29; 25) and is to be emitted by the signal providing device (42) can also be provided via a control line (47) switched through by manual actuation of a switch installed in the dashboard or the area of the driver's seat and that the auxiliary carrying function of the non-driven or raisable axle can be cancelled by interruption of this control line (47) using said switch (46).

10. Device as under Claim 1, characterised by the fact that that memory status of the memory (44) which maintains the auxiliary carrying function of the non-driven or raisable axle is erasable by manual actuation of a switch (48) installed in the dashboard or the area of the driver's seat and by corresponding transmission of a signal via a line (49).

11. Device as under one of the previous Claims, characterised by the fact that in the dashboard or in the driver's area of vision a check lamp or instrument (45) is provided by which the driver is informed about the position of the non-driven or raisable axle.

## Revendications

1. Dispositif pour enclencher et déclencher le fonctionnement de support additionnel d'un essieu auxiliaire ou rétractable par rapport à l'essieu voisin d'un véhicule , dans lequel une conduite sous pression (20, 21 ; 23, 23/1) raccordée à une alimentation en agent sous pression (12) mène à chaque organe (7, 8, 9 ; 10, 11) provoquant le fonctionnement de support additionnel, conduite sous pression dans laquelle est montée une électrovanne (28, 29 ; 25), et avec un dispositif de commande avec lequel les charges régnant dans deux côtés de l'essieu sont exploitées et par lequel, lorsqu'est atteinte ou dépassée la charge limite autorisée de l'essieu, le fonctionnement de support additionnel de l'essieu auxiliaire ou rétractable peut être déclenché au moyen d'un signal électrique actionnant l'électrovanne (28, 29 ; 25), le dispositif de commande présentant un dispositif de commutation (46), avec lequel le fonctionnement de support additionnel de l'essieu auxiliaire ou rétractable peut être aussi de façon générale mis en marche, quand la charge de l'essieu se trouve en dessous de la valeur limite autorisée de la charge, dispositif caractérisé en ce que le dispositif de commande est conçu en partant du fait que pour des charges se trouvant un tout petit peu en dessous de la charge limite autorisée au maximum de l'essieu du véhicule les balancements du châssis causés de cette façon pendant la marche par rapport à l'essieu ne puissent conduire à un déclenchement cyclique du système, donc à une mise en service et une mise hors service continuelle du fonctionnement additionnel de l'essieu auxiliaire ou rétractable et pour cela :

a) avec un organe d'exploitation (33) qui exploite les charges ($P_R$, $P_L$ ; $U_R$, $U_L$) régnant des deux côtés de l'essieu et qui lui sont transmises et les transforme en un signal de sortie ($P_a$ ; $U_a$), qui correspond à la plus basse des deux valeurs de charge ou à la valeur moyenne formée à partir de celles-ci.

b) puis avec d'autres organes, quand le signal de sortie mentionné ($P_a$ ; $U_a$) est détecté comme dépassant la valeur limite autorisée de la charge de l'essieu et comme se produisant sur une durée de temps minimale déterminée, provoque le déclenchement de la fonction de support additionnel de l'essieu auxiliaire ou rétractable et communique cet état à une mémoire électronique (52).

c) avec la mémoire (52) maintient alors le fonctionnement activé de support additionnel de l'essieu auxiliaire ou rétractable, quand le signal de sortie mentionné ($P_a$ ou $U_a$) représente une valeur se trouvant de nouveau en dessous de la valeur limite autorisée de la charge de l'essieu (de référence) et présente un dispositif de commutation (48, 49) avec lequel l'état de la mémoire (52) maintenant le fonctionnement de support additionnel de l'essieu auxiliaire ou rétractable libéré automatiquement, peut être alors effacé, quand le signal de sortie mentionné ($P_a$ ou $U_a$) représente une valeur se trouvant de nouveau on dessous de la valeur limite autorisée de la charge de l'essieu.

2. Dispositif selon la revendication 1, caractérisé en ce que l'organe d'exploitation (33) du dispositif de commande est une soupape de sélection par le bas ou un circuit de sélection par le bas, qui reçoit les charges régnant sur les deux côtés de l'essieu sous forme de valeurs de mesure ($P_R$, $P_L$ ; $U_R$, $U_L$) transmises de façon correspondante et produit à partir de là un signal de sortie ($P_a$, $U_a$), qui correspond à la plus basse valeur des deux valeurs de mesure de la charge ($P_R$, $P_L$ ; $U_R$, $U_L$).

3. Dispositif selon la revendication 1, caractérisé en ce que l'organe d'exploitation (33) du dispositif de commande est un appareil qui forme une valeur moyenne, en recevant les charges régnant des deux côtés de l'essieu sous forme de valeurs de mesure ($P_R$, $P_L$ ; $U_R$, $U_L$) transmises de façon correspondante et produit à partir de là un signal de sortie ($P_a$ ; $U_a$), qui correspond à la valeur moyenne arithmétique des deux valeurs de mesure de la charge ($P_R$, $P_L$ ; $U_R$, $U_L$).

4. Dispositif selon l'une des revendications 2 et 3, caractérisé en ce que dans le cas de véhicules avec essieux à suspension pneumatique, les charges régnant sur chaque côté de celui-ci ($P_R$, $P_L$) sont prélevées sur ou dans les conduites de commande sous pression (20 ; 21) conduisant à ceux-ci et existant à cet endroit ou dans les coussins d'air élastiques (1, 2 ; 3, 4) et sont amenés sous forme de valeurs de mesure par des conducteurs d'amenée de mesures (34, 35) à l'organe d'exploitation (33).

5. Dispositif selon l'une des revendications 2 et 3, caractérisé en ce que dans le cas de véhicules avec des essieux à lames de ressort les charges ($P_R$, $P_L$) régnant de chaque côté de ceux-ci, sont détectées au moyen d'enregistrement de valeurs de mesure appropriés (37, 38) et sont amenés depuis ceux-ci à l'organe d'exploitation (33) par des conducteurs d'amenée de valeurs de mesure (34, 35).

6. Dispositif selon l'une des revendications précédentes, caractérisé en ce que le signal de sortie ($P_a$ ; $U_a$) apparaissant sur l'organe d'exploitation (33) du dispositif de commande est amené à un interrupteur de valeur limite (39), qui n'est actionné que quand le signal de sortie ($P_a$ ; $U_a$) atteint ou dépasse la valeur limite autorisée de la charge pour l'essieu et d'une part est raccordé à un dispositif de préparation de signal (42) actionnant le fonctionnement de support additionnel de l'essieu auxiliaire ou rétractable, d'autre part à un dispositif électrique ou électronique de détection du temps (43), qui à son tour, est raccordé en aval à la mémoire électronique (44).

7. Dispositif selon l'une des revendications 1 à 5, caractérisé en ce que sont prévus deux commutateurs de valeur limite (50, 51), dont chacun détecte la charge régnant sur un côté de l'essieu et quand la valeur limite autorisée de la charge est atteinte ou dépassée est actionné par le signal correspondant, un signal ($U_R$ ; $U_L$) arrivant à l'organe d'exploitation (33) raccordé, organe qui produit un signal de sortie ($U_a$), qui

est amené à un dispositif électrique ou électronique de détection du temps (43) qui est lui même ensuite raccordé à la mémoire électronique (44) qui est en outre raccordée à un dispositif de préparation de signal (42) provoquant le fonctionnement de support additionnel de l'essieu auxiliaire ou rétractable.

8. Dispositif selon l'une des revendication 1, 6 et 7, caractérisé en ce que le dispositif de détection du temps (43) détecte la durée d'un signal représentatif de l'obtention ou du dépassement de la valeur limite autorisée de la charge de l'essieu, et la compare avec une durée minimale déterminée en lui, le cas échéant pouvant être réglée différemment et seulement quand cette dernière durée est dépassée :
   - rend opérationnel un signal de commande modifiant la position de commutation des électrovannes (28, 29 ; 25) montées en aval pour la mise en marche du fonctionnement de support additionnel de l'essieu auxiliaire ou rétractable.
   - produit un signal, par lequel est activée la mémoire électronique (44) en partant du fait que le signal de commande provoquant le fonctionnement de support additionnel de l'essieu auxiliaire ou rétractable est alors appliqué aux électrovannes (28, 29 ; 25) quand la valeur limite autorisée de la charge de l'essieu est de nouveau sous dépassée vers le bas.

9. Dispositif selon l'une des revendications 1, 6 et 7, caractérisé en ce que le fonctionnement de support additionnel de l'essieu auxiliaire ou rétractable peut être préparé par la modification de la position de commutation des électrovannes (28, 29 ; 25) provoquant le signal de commande électrique à délivrer par le dispositif (42) de préparation de signal également par l'intermédiaire d'un conducteur de commande (47) actionné par une commande manuelle placée sur le tableau de bord ou au voisinage du siège du conducteur et en ce qu'en interrompant ce conducteur de commande (47) au moyen de l'interrupteur (46) mentionné, on met à nouveau hors service le fonctionnement de support additionnel de l'essieu auxiliaire ou rétractable.

10. Dispositif selon la revendication 1, caractérisé en cc que l'état de la mémoire (44) qui maintient le fonctionnement de support additionnel de l'essieu auxiliaire ou rétractable peut être effacé et en fait par l'actionnement manuel d'un commutateur (48) disposé sur le tableau de bord ou au voisinage du siège du conducteur et de la transmission correspondante d'un signal par un conducteur (49).

11. Dispositif selon l'une des revendication précédentes, caractérisé en ce que sur le tableau de bord ou au voisinage du siège du conducteur est disposé une lumière de contrôle ou un affichage (45), par lequel le conducteur est informé de la position de l'essieu auxiliaire ou rétractable.

Fig.1

Fig.2

Fig.3

Fig. 4

EP 0 352 426 B1

Fig.5